(19) Europäisches Patentamt

European Patent Office

Office européen des brevets

(11) **EP 1 264 036 B1**

(12) **EUROPEAN PATENT SPECIFICATION**

(45) Date of publication and mention
of the grant of the patent:
**19.07.2006 Bulletin 2006/29**

(51) Int Cl.:
*D06N 3/12* (2006.01)    *D06M 15/643* (2006.01)
*B32B 27/12* (2006.01)    *A41D 31/02* (2006.01)

(21) Application number: **01923652.0**

(22) Date of filing: **08.03.2001**

(86) International application number:
**PCT/EP2001/002621**

(87) International publication number:
**WO 2001/066851 (13.09.2001 Gazette 2001/37)**

(54) **SOIL RESISTANT CLEANABLE CLOTHING**

SCHMUTZABWEISENDE REINIGBARE BEKLEIDUNG

VETEMENT NETTOYABLE RESISTANT AUX SALISSURES

(84) Designated Contracting States:
**AT BE CH CY DE DK ES FI FR GB GR IE IT LI LU
MC NL PT SE TR**

(30) Priority: **10.03.2000 EP 00105102**

(43) Date of publication of application:
**11.12.2002 Bulletin 2002/50**

(73) Proprietor: **W.L. Gore & Associates GmbH
85640 Putzbrunn (DE)**

(72) Inventors:
• **SCHWARZ, Stephan
85551 Kirchheim (DE)**
• **STÜBIGER, Werner
85579 Neubiberg (DE)**
• **MATUSCHE, Peter
81827 München (DE)**

(74) Representative: **Hirsch, Peter et al
Klunker Schmitt-Nilson Hirsch
Winzererstrasse 106
80797 München (DE)**

(56) References cited:
**WO-A-89/08553          WO-A-99/46118**

## Description

### FIELD OF THE INVENTION

This invention relates to a clothing and clothing parts which are easily cleaned.

### BACKGROUND OF THE INVENTION

Fabrics for clothing that resist soiling or that render the clothing easily cleanable are in demand. New and better means for making soil resistant clothing or for making it difficult for soil to penetrate clothing fabric is desirable.

In addition, it is desirable for outdoor clothing to be water-vapor-permeable to allow removal of perspiration vapor.

Durable soil repellency has been a long-sought goal. For instance, a continuous coating on the top of the textile with a polymer, for example silicone or polyurethane, may provide durable soil repellency with regard to water-soluble staining, but not with regard to greasy and oily stains. In addition, in some cases the materials lack air permeability and so provide poor comfort.

WO-A-89/08553 discloses a flexible, porous web comprised of fibers having interstices therebetween, wherein at least some of the fibers are individually at least partly encapsulated with a silicone polymer composition, and at least some of the interstices remain open, in order to improve rewashability of the web with maintaining breathability of the web. The term web is intended to include woven fabrics which are made of yarns being continuous strands comprised of a multiplicity of fibers or filaments in a bundled form.

In this invention, both goals - soil resistance and water-vapor-permeability - are achieved. Workwear that is highly visible, for example by having warning colors, is used worldwide to signal the user's presence in hazardous situations visually under any light conditions. In the European Union, the user may be required by law to wear warning clothing conforming to EN 471 (1994) (fluorescent orange, fluorescent yellow and fluorescent red). Typical work environments include roadwork, railroads or trash disposal. This clothing frequently becomes soiled in the course of this work, reducing the luminance of the colors and hence the signaling effect of the clothing. Consequently, the wearer of such clothing may in certain circumstances not be spotted in time in hazardous situations, endangering his or her health. If, after soiling, the color norm of EN471 (1994) is no longer achieved, the clothing may no longer be worn for that reason.

The present invention overcomes the deficiencies described above.

### SUMMARY OF THE INVENTION

The present invention provides a fabric according to claim 1 and a clothing according to claim 2. The dependent claims refer to embodiments of said clothing.

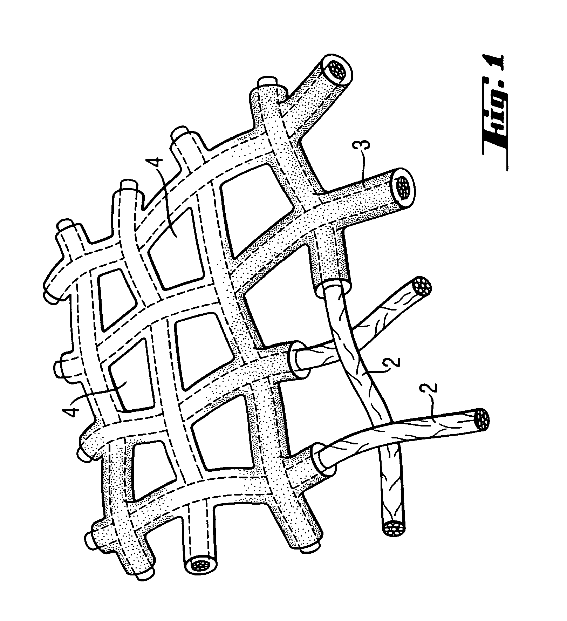

This invention describes a fabric for clothing in which the fabric is comprised of yarn and the yarn is coated with a coating that substantially completely encloses the yarn which is comprised of fiber bundles which are made up of many filaments, and so prevents soil penetrating and lodging between the filaments. This arrangement also prevents the absorption of oily soil components by the fiber material. To ensure air permeability, the fabrics chosen have spaces or interstices, as shown as 4 in Fig. 1, between the yarn which remain open even after coating. The coating encloses not only the yarn, but also the crossing points of the yarn, and thus enhances the stability of the fabric.

More particularly, in one embodiment, the invention is clothing comprising an outer fabric comprised of yarn in which the yarns are substantially entirely coated with silicone, but in which the silicone does not completely fill the interstices between the yarns, leading to openings in between the coated fibres with a width of 100 - 1000 $\mu$m, preferably 150-250 $\mu$m, leading to an air permeability (ISO 9237) (1995) of more than 500 l/m$^2$/s.

### BRIEF DESCRIPTION OF THE DRAWINGS

Fig. 1 depicts a coated fabric of the invention.
Fig. 2 depicts the coating process used in the invention.
Fig. 3 depicts silicone bumps or dots on a background functional layer.

### DETAILED DESCRIPTION OF THE INVENTION

This invention describes a fabric with soil resistance as a result of combined soil repellency and soil release properties.

Soil repellency means that the soil or stain does not adhere to the fabric, soil release means that the soil or stain is easily removed from the fabric by a cleaning method, e.g. washing.

As shown in Fig. 1, typical fabrics consist of yarns 2 which in themselves are bundles of fibres or filaments. When the fabric is stained, e.g. with a grease (mixture of oil and pigments) the stain can be deposited in various areas. The pigments can rest on top of the fibres, in between the fibres or between yarns at crossing points. The oil can be in the same areas and can also dissolute in the bulk of the fibres. It is nearly impossible to remove this stain by a standard washing procedure when it is trapped in between fibres (mechanically anchored) or in the bulk of the fibres.

In this invention the fiber bundles (yarns) are coated with a silicone (shown as 3 in Fig. 1), that penetrates between the bundles, ensuring mechanical attachment of the coating. The surface of the yarns is completely covered by the silicone, shown as 3 in Fig. 1, as well as the crossing points of the yarns. Thus, oil or pigment cannot penetrate between the bundles so the soil repellency is improved. Due to the smoothness of the surface of the coating, any stain being deposited there can be easily washed off during laundry, meaning good soil release properties.

The silicone coating may additionally contain one or several additives. The additives used may be reflective agents, mildew-resistant agents, hand-altering agents, viscosity agents, rheology agents, flexibility agents, ultraviolet aborbers, filing agents, electrical conductive agents, thermal conductive agents, flame retardants and radiation reflectibvity agents.

The linear density of the yarns used is preferably between 80 dtex and 300 dtex before coating.

The fabric has preferably a weight of 75 to 350 g/m². It is made with a warp and weft yarn count of between 10 and 40 yarns/cm.

The fabric of this invention is constructed in such a way that even after coating there are openings 4 between the yarns that improve the comfort of the wearer as the moisture can be transported from the body to the outside. These openings need to be larger than 100 $\mu$m to ensure an air permeability of at least 500 l/m²/s (measured by ISO 9237) (1995). Smaller openings as being described in U. S. Patent No. 5,846,604 do have a low air permeability and will also lead to reduced soil release features, as the washing bath does not easily flow through small openings and cannot pick up all the stain.

When a color standard of the clothing like EN 471 (1994) is needed the color of a background material behind the described fabric is also very important, as it is seen through the openings. With a dark background the color values of EN 471 (1994), especially the luminance, often cannot be reached. The background material can also be a textile or fabric material.

With a very heavy soiling, especially when the stain is pressed through the fabric, the background material can be stained, too. Thereby the overall soil resistance of the clothing is reduced. To overcome this problem the background material can be printed with a soil resistant material like silicone, e.g. in a dot or grid pattern. This will improve the soil repellency of the background material and also provides a gap between the coated fabric and the background material, making it more difficult to stain the latter. The pattern does also protect the background material from mechanical harm, e.g. abrasion. This is especially important when the background material consists of a functional layer like a water-vapor-permeable membrane with windproof and/or liquid waterproof characteristics as described below.

The coated, colored fabric can be prepared by treating the uncoated textile by classic textile dyeing methods. The subsequent coating with a transparent silicone has little if any effect on the color, so that the color continues to meet the color norm. On the other hand, it is also possible to use an undyed textile if appropriate dyes are added to the silicone prior to coating. The two methods of coloration may also be combined, for example, to achieve higher color brilliance.

As well as soil resistance, the silicone coating described also possesses water-repellent properties. The latter are also responsible for a very low water regain by the textile. The above-mentioned effects survive even repeated washing (domestic wash to ISO 6330 (1984) and industrial washes [standard under development at present]). Accordingly, a long use life is ensured for the clothing.

Example of a soil resist fabric:

a) raw materials:

The fabric is made of yarn and is preferably a woven or a knit. The yarns can be polyolefins, polyamides, polyesters, regenerated cellulose, cellulose acetate, rayons, acetates, acrylics, aramids, glasses, modacrylics, cotton, wool, silk, linen, jute, and mixtures thereof.

To treat the textile with silicone, an uncoated textile is used. In a preferred material, the uncoated weight of the textile is about 80 g/m². The yarn preferably comprises a polyester or polyamide which is non-texturized, but has a twist level of about 600 turns/m. The amount of silicone applied is about 100 g/m², depending on its degree of penetration into the textile. The remaining openings have a diameter of about 150 $\mu$m.

The silicones used can be of the RTV-Type, LSR-Type or mixtures thereof. These silicones consist of two parts which are mixed before use.

The curing process of the RTV (room temperature vulcanisation) silicones starts at the point of mixing at room temperature, but it accelerates with increasing temperature. A good curing temperature is between 120 and 180 °C.

LSR (liquid silicon rubber) silicones need a high temperature, that means between 160 and 200 °C, for curing.

The curing time is dependent on the silicone film thickness, the line speed, the length of the heating area and the selected temperature of the heating area.

b) processing:

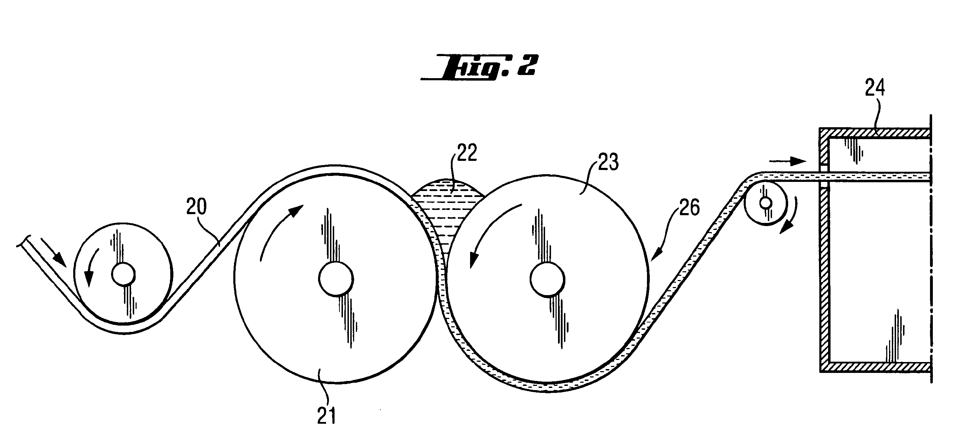

A process for producing the textile coating is depicted in Fig. 2 as follows:

Fabric 20 runs over roller 21 and goes through the coating solution 22 which is situated between chrome rollers 21 and 23 before passing under roller 23. The gap between the rollers is about 50 - 100 $\mu$m. Any extra solution, which is then between the yarns, will remain on the rollers at region 26, leaving the spaces between the yarns open. The curing process takes place in oven 24.

c) properties:

On such a fabric, soil stays on the smooth surface and does not penetrate into the filaments. Domestic washing at 40-95°C to ISO 6330 (1984) or industrial washing is then easily able to remove this soil, ensuring the values for the color norm of EN471 (1994), if required, can be adhered to. The firm attachment of the silicone to the textile ensures that the good soil resistance will exist even after 30 or more domestic wash cycles to ISO 6330 (1984). The color norm values, if needed, are maintained even in the case of multiple soiling (soil applied ten times to the same spot) with subsequent washing.

Air permeability is maintained by using a textile having yarn spacings of about 200 $\mu$m, leading to openings of about 150 $\mu$m after the coating has been applied. It is thus possible to measure an air permeability of more than 1000 l/m$^2$/s.

The coated textile is water repellent because of the fact that the silicone used is hydrophobic. Owing to the textile being completely sheathed with a silicone layer, it is thus durably protected against water and cannot become saturated either.

One method to determine the water repellency properties of textile structures with a rain test is the Bundesmann test (ISO 9865) (1991). The rain unit creates a rain defined by water volume, drop size and distance of rain unit to test samples. The test runs 10 minutes before the water repellency is checked by reference pictures and descriptions. The ratings range between 1 (poor) and 5 (good water repellency). After that the weight gain (water pickup of the fabric) is measured (in % related to the sample before the Bundesmann rain test).

In our example the water repellency after a ten minute Bundesmann shower (ISO 9865) (1991) scored a rating of 3 even after 30 domestic wash cycles, and the subsequently measured weight gain was less than 15%.

d) other textile properties:

Owing to the use of silicone as coating material and of a textile comprising multifilament yarns, the coated material has a soft hand. It is extremely flexible and offers high rebound elasticity in the diagonal direction in particular.

It possesses high thermal stability and does not become harsh or brittle even at extremely low temperatures. The good heat resistance is observable when worn by someone who is angle-grinding steel in that the shower of sparks (at a distance of 30 cm from the textile/time 30 s) will burn holes in an uncoated polyester fabric, but does not cause any damage to the coated material.

The coated fabric of this invention has improved flame-resistance in comparison with an uncoated fabric. The improved flame-resistance is maintained by the silicone coating because the silicone used have a high LOI (limited oxygen index). The LOI of silicone is about 24-35. One method to determine the flame-resistance of the coated fabric is described in the German/European standard DIN-EN 532 (1994). Which describes a method to determine the limited flame spread on textiles and textile materials. As a modification the test is done with 1 sec. instead of 10 sec. In one example, a fabric made of polyester (PES) with an uncoated weight of about 80g/m$^2$ is coated with silicone using the process described above. The coated and the uncoated PES-fabric is tested with modified DIN-EN 532 test described above. The coated fabric showed no hole formation after 1 seconds of flame exposure. The uncoated fabric showed hole formation after 1 sec. of flame exposure.

Combination with functional layers:

The coated textile can be combined with a water-vapor-permeable membrane background material to provide windproof characteristics and/or liquid waterproof characteristics. By combining the coated textile part with a water-vapor-permeable and windproof functional layer, the comfort provided by the clothing part can be further increased in outdoor applications. The purpose of these properties is to maintain the work capacity of the wearer and ensure physical comfort. The water-vapour-permeation can be measured by the FIH-BPI 1.4 (Forschungsinstitut Hohenstein - Bundesprüfinstitut) test method. This test specification describes a simple procedure by means of the cup method which permits the determination of the water vapour resistance of textiles. Hereby the fabric is arranged between a water surface and a measuring cup filled with a saturated salt solution. Special PTFE membranes (liquid waterproof, but at the same time well permeable to water vapour) are arranged at both sides of the sample and ensure that the sample is neither wicked by water nor by the salt solution. The partial pressure difference existing between the two sides of the samples causes the water vapour to pass through the sample from the water surface into the measuring cup. Its increase in mass during a defined measuring period permits the water vapour resistance of the sample to be determined. In order to be considered as water-vapor-permeable, the material should generally have a water-vapor-permeability of at least 1000, preferably greater than 1500 and more preferably greater than 3000 g/m$^2$/day, and can be over 15,000 g/m$^2$/24h.

The combination of the type of functional layer described above with the soil resistant fabric provides a clothing which offers good comfort and facilitates soil removal. By combining the coated fabric with a water-vapor-permeable and waterproof functional layer, the resulting clothing may also be worn when it is raining and so protect the wearer against wetness

A suitable water-resistant water-vapor-permeable flexible membrane for use herein is disclosed in US Patent No. 3,953,566 which discloses a porous expanded polytetrafluoroethylene (PTFE) material. The expanded porous PTFE has a micro-structure characterized by nodes interconnected by fibrils. If desired, the water resistance may be enhanced by coating the expanded PTFE with a hydrophobic and/or oleophobic coating material.

Water resistance:

Measurement of the water resistance is carried out in accordance with International Standard ISO 811. Preferably the functional layer is resistant to water pressure up to 0.13 bar.

The water-resistant water-vapor-permeable membrane might also be a microporous material such as a high molecular weight microporous polyethylene or polypropylene, microporous polyurethanes or polyesters, or a hydrophilic monolithic polymer such as a polyurethane.

A windproof film or membrane can also be used.

Clothing parts used at present usually only provide individual properties. For instance, clothing parts comprising coated base materials (e.g., polyurethane coatings) offer water repellency, waterproofness and windproofness, but they sometimes are substantially water-vapor-impermeable, so that there is a buildup of humidity in the clothing part. In addition, the initially good soil resistance decreases after a few washes, since some of such coatings become rough and brittle. Clothing parts containing waterproof, windproof and water-vapor-permeable inner layers (e.g., films and membranes) generally offer good wear comfort. The outer materials, however, are textile fabrics (wovens, for example) which, when provided with hydrophobic finishes (usually based on fluorocarbons), lose their water repellency after just a few washes. In addition, these outer materials offer soil repellency only with regard to water-soluble soil. Oily and greasy soil in particular will contaminate even materials which have been given a hydrophobic finish. In cases where the color standard EN 471 (1994) is needed the protective effect of the warning color with regard to the wearer/user will then be lost. This contamination is impossible to remove completely by washing.

The clothing can be in the form of pants, jackets, hat or gloves or the like.

The invention described herein, in contrast, provides virtually complete removal of the soil by washing. The wearer is thus protected against wetness by the inner functional layer, while the outer functional layer provides durable protection against hazards with its signaling effect, since washing will restore its luminance even after repeated heavy soiling.

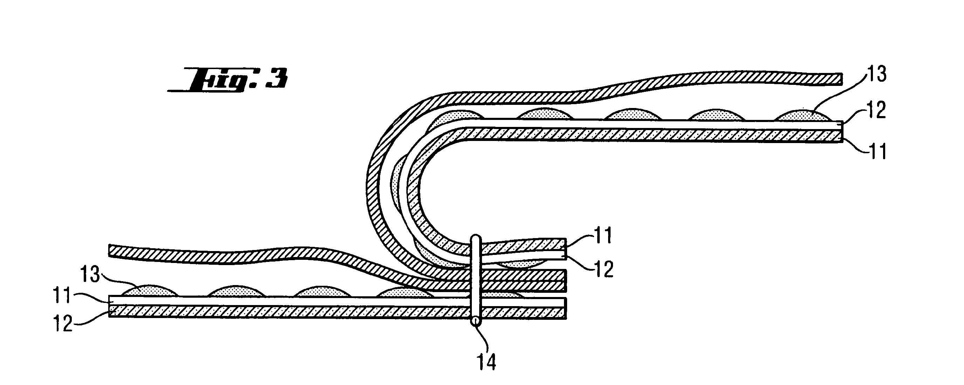

To prepare a clothing or clothing part, the coated textile and the functional material can be separate parts of the clothing, or the functional material can be attached to the coated fabric. In the latter instance, attachment may be by sewing the fabric with the functional material at each seam (Figure 3).

Insulation and added waterproof properties can be provided by the construction of Fig. 3 where the coated fabric is 11, the functional layer is 12, and silicone dots 13 separate the layers. Fig. 3 depicts two pieces seamed together at seam 14.

## TEST PROCEDURE

Air Permeability

To measure the air permeability of a textile, a test machine which can measure the air flow through the textile is used. The samples are placed between two rings which results in a test area of 100 cm$^2$. Air is sucked through the sample with a constant pressure of 100 Pa. Hereby the amount of air coming through the sample is measure and calculated in l/m$^2$/s.

Width of the openings

The coated fabric comprises openings between the yarns, which give rise to an air permeabliliy of more than 500l/m$^2$/s. These openings have a width of 100-1000 $\mu$m.
To measure the width of the openings, a microscope (e.g. a Zeiss-microscope) is used. The samples are placed into the microscope and the width is measured with a preferably 50x magnification in combination with an electronic measuring programm for distances.
Any further usefull magnification can be used.

Evaluation of Soil Resistance

Swatches of sample material are sewn onto jackets in the lower back region. Grease (buffer grease, part no. 2292 from Fuchs Lubritech GmbH, Weilerbach, Germany) is then applied using a template of 130 nm thickness with two holes each 2 cm in diameter. To ensure a flat surface, a 6 mm thick plastic sheet is placed under the jacket.

About 2 g of grease are spread across the two holes in the template. The template is then carefully lifted off. Blotting paper is applied over the grease, followed by a plastic film on top. A wooden spatula is then pulled over the plastic under moderate pressure. The plastic film is then removed and the blotting paper peeled off.

The coated sample is aged for about 18 hours. A standard domestic 60°C wash in an Electrolux washing machine according to ISO 6330/3A (1984), E is carried out with ECE detergent. The load is two jackets. Weight is about 2.2 kg.

The jacket is then tumbled in a dryer at about 70°C for 30 minutes.

Luminance and chromaticity of soiled and unsoiled jackets are measured with a Minolta CM 508C spectrophotometer. In the case of spotty staining, the darkest area is measured.

Calculation of luminance differences is done according to the following equations:

$$Y \text{ difference} = Y \text{ unsoiled} - Y\ 1 \text{ soiled}$$

Percentage difference to unsoiled fabric:

$$Y\% = Y \text{ difference} / Y \text{ unsoiled}$$

In the materials of the invention the background material will preferably have a luminance greater than Y = 60 for fluorescent yellow fabrics, preferably greater than Y = 35 for fluorescent orange fabrics and preferably greater than Y = 20 for fluorescent red fabrics in order to meet the requirements for the European Standard EN471. The clothing will have a luminance greater than 35 or greater than 20.

The clothing manufactured from the fabric has a luminance difference of less than 15% between a washed unsoiled area and a washed soiling. The soiling was carried out by buffer grease. The washing was carried out by a domestic washing cycle at 60°C in accordance with International Standard ISO 6330/3A (1984), E. Preferably the luminance difference of less than 15% is maintained after thirty domestic washing cycles. For fluorescent yellow fabrics a luminance difference of less than Y = 15 is present after soiling with buffer grease and a domestic washing cycle at 60°C in accordance with International Standard ISO 6330/3A, E. (1984). For the same domestic washing cycle, a luminance difference of less than Y = 7 is present for fluorescent orange fabrics and of less than Y = 5 for flourescent red fabrics. Preferably these luminance differences are also maintained after thirty domestic washing cycles.

Without intending to limit the scope of the present invention, the foregoing illustrates how the present invention may be made and used.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1.  Fabric comprised of yarn which is comprised of fiber bundles which are made up of filaments, with interstices (4) between the yarns (2),
    wherein the yarns (2) are substantially entirely coated with a silicone coating (3), but in which the silicone coating (3) does not completely fill the interstices (4) between the yarns (2).

2.  Clothing comprising a fabric according to claim 1.

3.  The clothing of claim 2 wherein the interstices between the yarns form openings in between the coated yarns with a width of 100 - 1000 $\mu$m, leading to an air permeability of more than 500 l/m$^2$/s.

4.  The clothing of claim 2 in the form of a pant, jacket, hat or glove.

5.  The clothing of claim 2 wherein the fabric is in the form of a knit or a woven fabric.

6.  The clothing of claim 5 wherein the fabric is in the form of a plain-woven fabric.

7.  The clothing of claim 2 wherein the yarn is selected from the group consisting of polyolefins, polyamides, polyesters, regenerated cellulose, cellulose acetate, rayons, acetates, acrylics, aramids, glasses, modacrylics, cotton, wool, silk, linen, jute, and mixtures thereof.

8.  The clothing of claim 2 wherein the yarn is a non-textured yarn.

9.  The clothing of claim 2 wherein the linear density of the yarn is between 80 dtex and 300 dtex.

10. The clothing of claim 2 wherein the yarn is twisted.

11. The clothing of claim 2 wherein the fabric has a weight of 75-350 g/m$^2$.

12. The clothing of claim 2 wherein the fabric has a warp and weft yarn count of 10-40 yarns/cm.

13. The clothing of claim 2 wherein the interstices have an average width between 150 $\mu$m and 250 $\mu$m.

14. The clothing of claim 2 wherein the air permeability (ISO 9237) (1995) of the fabric is higher than 1000 l/m$^2$/s.

15. The clothing of claim 2 wherein the fabric contains a dye and the silicone coating is translucent.

16. The clothing of claim 2 fulfilling the color of EN471 (1994) as a result of the silicone coating being colored.

17. The clothing of claim 2 wherein the silicone coating is made of a silicone of the RTV (room temperature vulcanization)-type.

18. The clothing of claim 2 wherein the silicone coating is made of a silicone of the LSR (liquid silicone rubber)-type.

19. The clothing of claim 2 wherein the silicone coating contains one or several additives.

20. The clothing of claim 19 wherein the additives are selected from the group consisting of reflective agents, mildew resistant agents, hand altering agents, viscosity agents, rheology agents, flexibility agents, ultraviolet absorbers, filling agents, electrical conductive agents, thermal conductive agents, flame retardants and radiation reflectivity agents.

21. The clothing of claim 2, wherein the fabric achieves a bead-off effect rating of at least 3 or better after 10 min Bundesmann rain test to ISO 9865 (1991).

22. The clothing of claim 2, wherein the fabric achieves a bead-off effect rating of at least 3 or better after 30 domestic washes at 60°C to ISO 6330/3A,E (1984) and after a subsequent 10 min Bundesmann rain test to ISO 9865 (1991).

23. The clothing of claim 2, wherein the fabric achieves a water absorption of less than 20% after a 10 min Bundesmann rain test to ISO 9865 (1991).

24. The clothing of claim 2, wherein the fabric achieves a water absorption of less than 20% after 30 domestic washes at 60°C to ISO 6330/3A,E (1984) and after a subsequent 10 min Bundesmann rain test to ISO 9865 (1991).

25. The clothing of claim 2 wherein the fabric has a limited flame spread according to DIN/EN 532 (1994).

**Patentansprüche**

1. Stoff, bestehend aus Garnmaterial, das aus Faserbündeln gebildet ist, die aus Einzelfäden gebildet sind, wobei zwischen den Fäden (2) Zwischenräume (4) vorhanden sind,
wobei die Fäden (2) im Wesentlichen vollständig mit einer Silikonbeschichtung (3) beschichtet sind, jedoch die Silikonbeschichtung (3) die Zwischenräume (4) zwischen den Fäden (2) nicht vollständig ausfüllt.

2. Bekleidung, die einen Stoff gemäß Anspruch 1 aufweist.

3. Bekleidung nach Anspruch 2,
wobei die Zwischenräume zwischen den Fäden Öffnungen zwischen den beschichteten Fäden mit einer Breite von 100 - 1000 $\mu$m bilden, die zu einer Luftdurchlässigkeit von mehr als 500 l/m$^2$/s führen.

4. Bekleidung nach Anspruch 2 in Form einer Hose, einer Jacke, einer Kopfbedeckung oder eines Handschuhs.

5. Bekleidung nach Anspruch 2,
wobei der Stoff in Form eines Gewirkes oder eines Gewebes vorliegt.

6. Bekleidung nach Anspruch 5,
wobei der Stoff in Form eines Gewebes in Leinwandbindung vorliegt.

7. Bekleidung nach Anspruch 21,
wobei das Garnmaterial ausgewählt ist aus der Gruppe bestehend aus Polyolefinen, Polyamiden, Polyestern, regenerierter Zellulose, Zelluloseazetat, Rayons, Azetaten, Acrylen, Aramiden, Glasmaterialien, Modacrylen, Baumwolle, Wolle, Seide, Leinen, Jute und Mischungen davon.

8. Bekleidung nach Anspruch 2,
wobei das Garnmaterial ein nicht texturiertes Garnmaterial ist.

9. Bekleidung nach Anspruch 2,
wobei die lineare Dichte des Garnmaterials zwischen 80 dtex und 300 dtex beträgt.

10. Bekleidung nach Anspruch 2,
wobei das Garnmaterial gezwirnt ist.

11. Bekleidung nach Anspruch 2,
wobei der Stoff ein Gewicht von 75-350 g/m$^2$ aufweist.

12. Bekleidung nach Anspruch 2,
wobei der Stoff eine Ketten- und Schussfadenanzahl von 10-40 Fäden/cm aufweist.

13. Bekleidung nach Anspruch 2,
wobei die Zwischenräume eine durchschnittliche Breite zwischen 150 $\mu$m and 250 $\mu$m aufweisen.

14. Bekleidung nach Anspruch 2,
wobei die Luftdurchlässigkeit (ISO 9237) (1995) des Stoffs höher ist als 1000 l/m$^2$/s.

15. Bekleidung nach Anspruch 2,
wobei der Stoff einen Farbstoff enthält und die Silikonbeschichtung lichtdurchlässig ist.

16. Bekleidung nach Anspruch 2,
die die Farbe nach EN 471 (1994) als Ergebnis davon erfüllt, dass die Silikonbeschichtung farbig ist.

17. Beschichtung nach Anspruch 2,
wobei die Silikonbeschichtung aus einem Silikon des RTV (room temperature vulcanization bzw. bei Raumtemperatur vulkanisierenden)-Typs gebildet ist.

18. Beschichtung nach Anspruch 2,

wobei die Silikonbeschichtung aus einem Silikon des LSR (liquid silicone rubber bzw. Flüssigsilikongummi)-Typs gebildet ist.

**19.** Bekleidung nach Anspruch 2,
wobei die Silikonbeschichtung einen oder mehrere Zusatzstoffe enthält.

**20.** Bekleidung nach Anspruch 19,
wobei die Zusatzstoffe ausgewählt sind aus der Gruppe bestehend aus reflektierenden Stoffen, gegen Mehltau beständigen Stoffen, sich in der Hand ändernden Stoffen, Viskositäts-Stoffen, Rheologie-Stoffen, Flexibilitäts-Stoffen, UV-Absorbern, Füllstoffen, elektrisch leitfähigen Stoffen, wärmeleitfähigen Stoffen, flammverzögernden Stoffen und Stoffen mit Strahlungsreflexionsvermögen.

**21.** Bekleidung nach Anspruch 2,
wobei der Stoff eine Abperleffekt-Klassifizierung von mindestens 3 oder besser nach einem zehnminütigen Bundesmann-Regentest nach ISO 9865 (1991) erreicht.

**22.** Bekleidung nach Anspruch 2,
wobei der Stoff eine Abperleffekt-Klassifizierung von mindestens 3 oder besser nach 30 häuslichen Waschvorgängen bei 60 °C nach ISO 6330/3A,E (1984) und nach einem anschließenden zehnminütigen Bundesmann-Regentest nach ISO 9865 (1991) erreicht.

**23.** Bekleidung nach Anspruch 2,
wobei der Stoff eine Wasseraufnahme von weniger als 20 % nach einem zehnminütigen Bundesmann-Regentest nach ISO 9865 (1991) erreicht.

**24.** Bekleidung nach Anspruch 2,
wobei der Stoff eine Wasseraufnahme von weniger als 20 % nach 30 häuslichen Waschvorgängen bei 60 °C nach ISO 6330/3A, E (1984) und nach einem anschließenden zehnminütigen Bundesmann-Regentest nach ISO 9865 (1991) erreicht.

**25.** Bekleidung nach Anspruch 2,
wobei der Stoff eine begrenzte Flammausbreitung nach DIN/EN 532 (1994) aufweist.

## Revendications

**1.** Toile faite de fil qui est composé de faisceaux de fibres qui sont constitués par des filaments, avec des interstices (4) entre les fils (2), dans laquelle les fils (2) sont presque entièrement revêtus avec un revêtement en silicone (3) mais dans laquelle le revêtement en silicone (3) ne remplit pas complètement les interstices (4) entre les fils (2).

**2.** Vêtement comprenant une toile selon la revendication 1.

**3.** Vêtement selon la revendication 2, dans lequel les interstices entre les fils forment entre les fils revêtus des ouvertures ayant une largeur de 100 à 1000 $\mu$m, ce qui donne une perméabilité à l'air supérieure à 500 l/m$^2$/s.

**4.** Vêtement selon la revendication 2, sous la forme d'un pantalon, d'une veste, d'un chapeau ou d'un gant.

**5.** Vêtement selon la revendication 2, dans lequel la toile se présente sous la forme d'une toile tricotée ou tissée.

**6.** Vêtement selon la revendication 5, dans lequel la toile se présente sous la forme d'une toile croisée.

**7.** Vêtement selon la revendication 2, dans lequel le fil est choisi dans le groupe constitué par des polyoléfines, des polyamides, des polyesters, la cellulose régénérée, l'acétate de cellulose, des rayonnes, des acétates, des acryliques, des aramides, des verres, des mod-acryliques, le coton, la laine, la soie, le lin, le jute, ainsi que des mélanges de ceux-ci.

**8.** Vêtement selon la revendication 2, dans lequel le fil est un fil non texturé.

**9.** Vêtement selon la revendication 2, dans lequel la densité linéaire du fil se situe dans la plage de 80 dtex à 300 dtex.

**10.** Vêtement selon la revendication 2, dans lequel le fil est tourné.

**11.** Vêtement selon la revendication 2, dans lequel la toile a un poids de 75 à 350 g/m$^2$.

**12.** Vêtement selon la revendication 2, dans lequel la toile a un titre de fils de chaîne et de trame de 10 à 40 fils/cm.

**13.** Vêtement selon la revendication 2, dans lequel les interstices ont une largeur moyenne dans la plage de 150 $\mu$m à 250 $\mu$m.

**14.** Vêtement selon la revendication 2, dans lequel la perméabilité à l'air (ISO 9237) (1995) de la toile est supérieure à 1000 l/m$^2$/s.

**15.** Vêtement selon la revendication 2, dans lequel la toile contient un colorant et le revêtement en silicone est translucide.

**16.** Vêtement selon la revendication 2, conforme à la couleur de l'EN471 (1994) du fait que le revêtement en silicone est coloré.

**17.** Vêtement selon la revendication 2, dans lequel le revêtement en silicone est constitué par un silicone de type RTV (vulcanisation à la température ambiante).

**18.** Vêtement selon la revendication 2, dans lequel le revêtement en silicone est constitué par un silicone de type LSR (caoutchouc silicone liquide).

**19.** Vêtement selon la revendication 2, dans lequel le revêtement en silicone contient un ou plusieurs additifs.

**20.** Vêtement selon la revendication 19, dans lequel les additifs sont choisis dans le groupe constitué par des agents réfléchissants, des agents anti-moisissure, des agents de modification du toucher, des agents de viscosité, des agents de rhéologie, des agents assouplissants, des absorbeurs d'ultraviolets, des matières de charge, des agents électriquement conducteurs, des agents thermiquement conducteurs, des agents ignifuges et des agents réfléchissant les rayonnements.

**21.** Vêtement selon la revendication 2, dans lequel la toile atteint une note d'effet de résistance au mouillage d'au moins 3 ou plus après un essai d'arrosage Bundesmann de 10 minutes suivant ISO 9865 (1991).

**22.** Vêtement selon la revendication 2, dans lequel la toile atteint une note d'effet de résistance au mouillage d'au moins 3 ou plus après 30 lavages domestiques à 60°C suivant ISO 6330/3A,E (1984) et après un essai d'arrosage Bundesmann consécutif de 10 minutes suivant ISO 9865 (1991).

**23.** Vêtement selon la revendication 2, dans lequel la toile atteint une absorption d'eau inférieure à 20% après un essai d'arrosage Bundesmann de 10 minutes suivant ISO 9865 (1991).

**24.** Vêtement selon la revendication 2, dans lequel la toile atteint une absorption d'eau inférieure à 20% après 30 lavages domestiques à 60°C suivant ISO 6330/3A,E (1984) et après un essai d'arrosage Bundesmann consécutif de 10 minutes suivant ISO 9865 (1991).

**25.** Vêtement selon la revendication 2, dans lequel la toile a une propagation de flamme limitée suivant DIN/EN 532 (1994).

Fig. 1

Fig. 2

EP 1 264 036 B1

Fig. 3